# EUROPEAN PATENT SPECIFICATION

(11) **EP 4 407 010 B1**
(45) Date of publication and mention of the grant of the patent: **11.02.2026**
(21) Application number: 23866638.2
(22) Date of filing: 08.11.2023
(51) Int. Cl.: C09J 197/00, C09J 11/06, C09J 11/08, C09J 11/04, C09J 4/06, C08H 7/00

(54) **LIGNIN FORMALDEHYDE-FREE ADHESIVE AND PREPARATION METHOD THEREFOR**
LIGNINFORMALDEHYDFREIER KLEBSTOFF UND HERSTELLUNGSVERFAHREN DAFÜR
ADHÉSIF À BASE DE LIGNINE, EXEMPT DE FORMALDÉHYDE, ET SON PROCÉDÉ DE PRÉPARATION

(30) Priority: 09.12.2022 CN 202211581205
(43) Date of publication of application: 31.07.2024
(73) Proprietor: Shanghai Changfa New Materials Co., Ltd., Shanghai 200030 (CN)
(72) Inventor: SHI, Quentin, Shanghai 200030 (CN); SUN, Haiqiang, Shanghai 200030 (CN); JIN, Xiachao, Shanghai 200030 (CN)
(74) Representative: Bayramoglu et al.
(86) International application number: PCT/CN2023/130410
(87) International publication number: WO 2024/120106

(56) References cited:
- CN-A- 101 412 898
- CN-A- 102 834 475
- CN-A- 115 181 543
- CN-A- 115 772 383
- US-A1- 2016 145 478

## Description

### TECHNICAL FIELD

The present disclosure relates to the field of adhesives, and in particular to a formaldehyde-free lignin-based adhesive and a preparation method thereof.

### BACKGROUND

Wood adhesives are a key core technology for the wood-based panel industry. Adhesives used for the production of wood-based panels in China have long been dominated by phenolic resin adhesives, urea-formaldehyde resin adhesives, and melamine-formaldehyde resin adhesives. During the production and use processes of these adhesives, a harmful gas, i.e., free formaldehyde, will be released. As a result, the current wood-based panel products in China generally have a low grade and cause a great hidden danger of poisoning the living environment (such as the leukemia infant scandal). Due to complicated technology, difficult development, and the high cost of high-performance and high-quality formaldehyde-free adhesives, it has been difficult to make breakthroughs in the replacement of phenolic resin adhesives, urea-formaldehyde resin adhesives, and melamine-formaldehyde resin adhesives with formaldehyde-free wood adhesives. Novel low-formaldehyde and formaldehyde-free wood-based panel products and test standards thereof are vigorously promoted in China, and formaldehyde-free wood-based panel products will become mainstream in the market in the next 20 to 30 years.

At present, formaldehyde-free adhesives used in household products mainly include soybean protein-based adhesives, starch-based adhesives, isocyanate adhesives, and thermoplastic resin adhesives. The starch-based adhesives and the soybean protein-based adhesives have advantages such as low price and environmental friendliness, but they also have disadvantages such as poor water resistance, poor stability, and low bonding strength. The thermoplastic resin adhesives have advantages such as a high curing rate, low price, and strong adhesion, but they also have disadvantages such as poor heat and water resistance. The isocyanate adhesives have advantages such as high bonding strength, excellent water resistance, and a high curing rate, but they also have disadvantages such as high production costs, complicated processes, and a short working life, which limit the use of isocyanate adhesives in the wood flooring industry. CN 115 181 543 A discloses an adhesive comprising: 10-90 parts of sodium lignosulfonate; 1-80 parts of water; 2-40 parts of epichlorohydrin; 15-50 parts of an alkaline solution.

In order to solve the above problems, the present disclosure adopts lignin widely present in natural wood as a major raw material for preparing a formaldehyde-free adhesive. The formaldehyde-free adhesive prepared by the present disclosure does not cause the release of formaldehyde, and is safe and eco-friendly. Diallyl sulfide can increase the activity of lignin and the initial viscosity of the product to ensure uniform adhesive application, epichlorohydrin can enhance the bonding strength of lignin, and a water-retaining agent can improve the opening time of the product after adhesive application.

### SUMMARY

To allow the above objective, the present disclosure provides the following technical solutions:
The present disclosure provides a formaldehyde-free lignin-based adhesive prepared from the following raw materials in parts by mass: 100 parts of lignin, 2 to 10 parts of diallyl sulfide, 10 to 15 parts of epichlorohydrin, 10 to 20 parts of a modifying agent, and 5 to 10 parts of a water-retaining agent.

Preferably, the diallyl sulfide is diallyl disulfide.

Preferably, the modifying agent includes one or more of potassium silicate, sodium silicate, and rubidium silicate.

More preferably, the modifying agent includes one or more of potassium silicate and sodium silicate.

Preferably, the water-retaining agent includes one or more of konjac flour, carrageenan, sodium carboxymethyl cellulose, carboxymethyl cellulose ether, sodium hydroxymethyl cellulose, sodium alginate, and gelatin.

More preferably, the water-retaining agent is a mixture of konjac flour, carrageenan, sodium alginate, and gelatin; and/or
the water-retaining agent is a mixture of sodium carboxymethyl cellulose, carboxymethyl cellulose ether, and sodium hydroxymethyl cellulose.

The present disclosure also provides a preparation method of the formaldehyde-free lignin-based adhesive, including the following steps:
(1) dissolving and dispersing the lignin in the ethanol to obtain a lignin-containing ethanol solution; after uniformly dispersing, slowly adding the diallyl sulfide dropwise with a dropping pump; and heating to 50°C to 80°C, adding the epichlorohydrin, and allowing heat preservation for 30 min to 90 min;
(2) cooling to 20°C to 50°C, adding the modifying agent, slowly heating to 60°C to 85°C, and allowing heat preservation for 60 min to 120 min; and
(3) adding the water-retaining agent, and after the water-retaining agent is completely dissolved, cooling to room temperature to obtain the formaldehyde-free lignin-based adhesive.

Preferably, in the step (1), a mass content of the lignin in the lignin-containing ethanol solution is 38% to 45%.

Compared with the prior art, the present disclosure has the following advantages:
(1) The formaldehyde-free adhesive prepared by the present disclosure does not cause the release of formaldehyde, and is safe and eco-friendly.
(2) The diallyl sulfide can increase an activity of lignin and an initial viscosity of the product to ensure uniform adhesive application, the epichlorohydrin can enhance a bonding strength of lignin, and the water-retaining agent can improve an opening time of the product after adhesive application.
(3) Lignin is produced in the nature, and the whole production process of lignin is pollution-free and sustainable. Lignin can be extracted from a papermaking waste, which contributes to the environmental protection.

### DETAILED DESCRIPTION OF THE EMBODIMENTS

The present disclosure is further illustrated in conjunction with examples below, but the protection scope of the present disclosure is not limited thereto.

### Example 1

A preparation method of a formaldehyde-free lignin-based adhesive was provided, including the following steps:
(1) 100 parts of lignin were dissolved and uniformly dispersed in ethanol to obtain a lignin-containing ethanol solution with a lignin content of 38%; then 2 parts of diallyl disulfide were slowly added dropwise to a reactor with the lignin-containing ethanol solution; and the reactor was heated to 65°C, 13 parts of epichlorohydrin were added to the reactor, and the reactor was subjected to heat preservation for 50 min.
(2) The reactor was cooled to 30°C, then 16 parts of potassium silicate were added to the reactor, and then the reactor was slowly heated to 85°C and subjected to heat preservation for 60 min.
(3) 7 parts of konjac flour were added to the reactor, and after the konjac flour was completely dissolved, the reactor was cooled to room temperature to obtain the formaldehyde-free lignin-based adhesive.

### Example 2

A preparation method of a formaldehyde-free lignin-based adhesive was provided, including the following steps:
(1) 100 parts of lignin were dissolved and uniformly dispersed in ethanol to obtain a lignin-containing ethanol solution with a lignin content of 40%; then 7 parts of diallyl disulfide were slowly added dropwise to a reactor with the lignin-containing ethanol solution; and the reactor was heated to 50°C, 10 parts of epichlorohydrin were added to the reactor, and the reactor was subjected to heat preservation for 30 min.
(2) The reactor was cooled to 50°C, then 20 parts of sodium silicate were added to the reactor, and then the reactor was slowly heated to 70°C and subjected to heat preservation for 120 min.
(3) 5 parts of carrageenan were added to the reactor, and after the carrageenan was completely dissolved, the reactor was cooled to room temperature to obtain the formaldehyde-free lignin-based adhesive.

### Example 3

A preparation method of a formaldehyde-free lignin-based adhesive was provided, including the following steps:
(1) 100 parts of lignin were dissolved and uniformly dispersed in ethanol to obtain a lignin-containing ethanol solution with a lignin content of 45%; then 10 parts of diallyl disulfide were slowly added dropwise to a reactor with the lignin-containing ethanol solution; and the reactor was heated to 80°C, 15 parts of epichlorohydrin were added to the reactor, and the reactor was subjected to heat preservation for 90 min.
(2) The reactor was cooled to 20°C, then 10 parts of potassium silicate were added to the reactor, and then the reactor was slowly heated to 60°C and subjected to heat preservation for 100 min.
(3) 10 parts of sodium carboxymethyl cellulose were added to the reactor, and after the sodium carboxymethyl cellulose was completely dissolved, the reactor was cooled to room temperature to obtain the formaldehyde-free lignin-based adhesive.

### Example 4

A preparation method of a formaldehyde-free lignin-based adhesive was provided, including the following steps:
(1) 100 parts of lignin were dissolved and uniformly dispersed in ethanol to obtain a lignin-containing ethanol solution with a lignin content of 42%; then 4 parts of diallyl disulfide were slowly added dropwise to a reactor with the lignin-containing ethanol solution; and the reactor was heated to 60°C, 13 parts of epichlorohydrin were added to the reactor, and the reactor was subjected to heat preservation for 50 min.
(2) The reactor was cooled to 40°C, then 16 parts of sodium silicate were added to the reactor, and then the reactor was slowly heated to 85°C and subjected to heat preservation for 60 min.
(3) 3.5 parts of gelatin and 3.5 parts of carrageenan were added to the reactor, and after the gelatin and the carrageenan were completely dissolved, the reactor was cooled to room temperature to obtain the formaldehyde-free lignin-based adhesive.

### Example 5

A preparation method of a formaldehyde-free lignin-based adhesive was provided, including the following steps:
(1) 100 parts of lignin were dissolved and uniformly dispersed in ethanol to obtain a lignin-containing ethanol solution with a lignin content of 44%; then 8 parts of diallyl disulfide were slowly added dropwise to a reactor with the lignin-containing ethanol solution; and the reactor was heated to 80°C, 12 parts of epichlorohydrin were added to the reactor, and the reactor was subjected to heat preservation for 90 min.
(2) The reactor was cooled to 20°C, then 11 parts of potassium silicate were added to the reactor, and then the reactor was slowly heated to 60°C and subjected to heat preservation for 100 min.
(3) 4 parts of sodium carboxymethyl cellulose and 4 parts of hydroxymethyl cellulose ether were added to the reactor, and after the sodium carboxymethyl cellulose and the hydroxymethyl cellulose ether were completely dissolved, the reactor was cooled to room temperature to obtain the formaldehyde-free lignin-based adhesive.

### Comparative Example 1

An eco-friendly formaldehyde-free adhesive obtained in Example 1 of the patent CN112080226.

### Implementation effects:

Table 1 shows performance test data of Examples 1 to 5 and Comparative Example 1. The initial viscosity refers to a time during which a slab with an adhesive applied does not fall apart after cold pressing. The opening time refers to a time during which a slab with an adhesive applied can be cold-pressed normally with a guaranteed cold-pressing effect after a specified period of open storage. The bonding strength and the released formaldehyde amount are tested in accordance with the national standard GB/T 17657-2013.

**Table 1**

| Sample | Initial viscosity (h) | Opening time (h) | Bonding strength (MPa) | Released formaldehyde amount (mg/L) |
|---|---|---|---|---|
| Example 1 | 48 | 2 | 1.09 | 0.01 |
| Example 2 | 50 | 3 | 0.98 | 0.02 |
| Example 3 | 47 | 2.5 | 1.10 | 0.01 |
| Example 4 | 55 | 3 | 1.04 | 0.01 |
| Example 5 | 53 | 2.5 | 1.0 | 0.02 |
| Comparative Example 1 | 20 | 1.5 | 0.8 | 0.02 |

It can be seen from Table 1 that, compared with Comparative Example 1, Examples 1 to 5 have a significantly-increased initial viscosity and opening time, and exhibit a prominent bonding strength and a very small formaldehyde release rate that can be basically ignored.

## Claims

1. A formaldehyde-free lignin-based adhesive prepared from the following raw materials in parts by mass: 100 parts of lignin, 2 to 10 parts of diallyl sulfide, 10 to 15 parts of epichlorohydrin, 10 to 20 parts of a modifying agent, and 5 to 10 parts of a water-retaining agent.

2. The formaldehyde-free lignin-based adhesive according to claim 1, wherein the diallyl sulfide is diallyl disulfide.

3. The formaldehyde-free lignin-based adhesive according to claim 1, wherein the modifying agent comprises one or more of potassium silicate, sodium silicate, and rubidium silicate.

4. The formaldehyde-free lignin-based adhesive according to claim 1, wherein the water-retaining agent comprises one or more of konjac flour, carrageenan, sodium carboxymethyl cellulose, carboxymethyl cellulose ether, sodium hydroxymethyl cellulose, sodium alginate, and gelatin.

5. The formaldehyde-free lignin-based adhesive according to claim 1, wherein ethanol is further adopted as a raw material for preparing the formaldehyde-free lignin-based adhesive.

6. A preparation method of the formaldehyde-free lignin-based adhesive according to any one of claims 1 to 5, comprising the following steps:
(1) dissolving and dispersing the lignin in the ethanol to obtain a lignin-containing ethanol solution; after the lignin is uniformly dispersed, slowly adding the diallyl sulfide to the lignin-containing ethanol solution dropwise with a dropping pump to obtain a first mixture; heating the first mixture to 50°C to 80°C, adding the epichlorohydrin to the first mixture to obtain a second mixture, and allowing the second mixture to be subjected to a heat preservation for 30 min to 90 min;
(2) cooling the second mixture to 20°C to 50°C, adding the modifying agent to the second mixture to obtain a third mixture, slowly heating the third mixture to 60°C to 85°C, and allowing the third mixture to be subjected to a heat preservation for 60 min to 120 min; and
(3) adding the water-retaining agent to the third mixture to obtain a fourth mixture, and after the water-retaining agent is completely dissolved, cooling the fourth mixture to room temperature to obtain the formaldehyde-free lignin-based adhesive.

7. The preparation method of the formaldehyde-free lignin-based adhesive according to claim 6, wherein in the step (1), a mass content of the lignin in the lignin-containing ethanol solution is 38% to 45%.

## Patentansprüche

1. Ein formaldehydfreies, ligninbasiertes Klebemittel, hergestellt aus folgenden Rohstoffen in Teilen nach Masse: 100 Teile Lignin, 2 bis 10 Teile Diallylsulfid, 10 bis 15 Teile Epichlorhydrin, 10 bis 20 Teile Modifizierungsmittel und 5 bis 10 Teile Wasserhaltemittel.

2. Formaldehydfreies ligninbasiertes Klebemittel nach Anspruch 1, wobei das Diallylsulfid Diallyldisulfid ist.

3. Formaldehydfreies ligninbasiertes Klebemittel nach Anspruch 1, wobei das Modifizierungsmittel ein oder mehrere von Kaliumsilikat, Natriumsilikat und Rubidiumsilikat umfasst.

4. Formaldehydfreies ligninbasiertes Klebemittel nach Anspruch 1, wobei das Wasserhaltemittel ein oder mehrere von Konjakmehl, Carrageen, Natriumcarboxymethylcellulose, Carboxymethylcelluloseether, Natriumhydroxymethylcellulose, Natriumalginat und Gelatine umfasst.

5. Formaldehydfreies ligninbasiertes Klebemittel nach Anspruch 1, wobei Ethanol ferner als Rohmaterial zur Herstellung des formaldehydfreien ligninbasierten Klebemittels verwendet wird.

6. Herstellungsverfahren des formaldehydfreien ligninbasierten Klebemittels nach einem der Ansprüche 1 bis 5, umfassend die folgenden Schritte:
(1) Lösen und Dispergieren des Lignins in dem Ethanol, um eine ligninhaltige Ethanollösung zu erhalten; nachdem das Lignin gleichmäßig dispergiert ist, langsames tropfenweises Zugeben des Diallylsulfids zu der ligninhaltigen Ethanollösung mittels einer Tropfpumpe, um ein erstes Gemisch zu erhalten; Erhitzen des ersten Gemisches auf 50 °C bis 80 °C, Zugeben des Epichlorhydrins zu dem ersten Gemisch, um ein zweites Gemisch zu erhalten, und Unterziehen des zweiten Gemisches einer Wärmehaltung für 30 min bis 90 min;
(2) Abkühlen des zweiten Gemisches auf 20 °C bis 50 °C, Zugeben des Modifizierungsmittels zu dem zweiten Gemisch, um ein drittes Gemisch zu erhalten, langsames Erhitzen des dritten Gemisches auf 60 °C bis 85 °C und Unterziehen des dritten Gemisches einer Wärmehaltung für 60 min bis 120 min; und
(3) Zugeben des Wasserhaltemittels zu dem dritten Gemisch, um ein viertes Gemisch zu erhalten, und nach vollständigem Lösen des Wasserhaltemittels Abkühlen des vierten Gemisches auf Raumtemperatur, um das formaldehydfreie ligninbasierte Klebemittel zu erhalten.

7. Herstellungsverfahren des formaldehydfreien ligninbasierten Klebemittels nach Anspruch 6, wobei in Schritt (1) ein Massenanteil des Lignins in der ligninhaltigen Ethanollösung 38 % bis 45 % beträgt.

## Revendications

1. Adhésif à base de lignine sans formaldéhyde préparé à partir des matières premières suivantes en parties en masse : 100 parties de lignine, 2 à 10 parties de sulfure de diallyle, 10 à 15 parties d'épichlorhydrine, 10 à 20 parties d'un modificateur, et 5 à 10 parties d'un agent de rétention d'eau.

2. Adhésif à base de lignine sans formaldéhyde selon la revendication 1, dans lequel le sulfure de diallyle est le disulfure de diallyle.

3. Adhésif à base de lignine sans formaldéhyde selon la revendication 1, dans lequel le modificateur comprend un ou plusieurs parmi le silicate de potassium, le silicate de sodium et le silicate de rubidium.

4. Adhésif à base de lignine sans formaldéhyde selon la revendication 1, dans lequel l'agent de rétention d'eau comprend une ou plusieurs parmi la farine de konjac, le carraghénane, la carboxyméthylcellulose sodique, l'éther de carboxyméthylcellulose, l'hydroxyméthylcellulose sodique, l'alginate de sodium et la gélatine.

5. Adhésif à base de lignine sans formaldéhyde selon la revendication 1, dans lequel de l'éthanol est en outre adopté comme matière première pour préparer l'adhésif à base de lignine sans formaldéhyde.

6. Procédé de préparation de l'adhésif à base de lignine sans formaldéhyde selon l'une quelconque des revendications 1 à 5, comprenant les étapes suivantes consistant à :
(1) dissoudre et disperser la lignine dans l'éthanol pour obtenir une solution d'éthanol contenant de la lignine ; après dispersion uniforme de la lignine, ajouter lentement le sulfure de diallyle à la solution d'éthanol contenant de la lignine goutte-à-goutte à l'aide d'une pompe à pipette pour obtenir un premier mélange ; chauffer le premier mélange jusqu'à 50°C à 80°C, ajouter l'épichlorhydrine au premier mélange pour obtenir un deuxième mélange, et permettre une conservation à chaud du deuxième mélange pendant 30 min à 90 min ;
(2) refroidir le deuxième mélange jusqu'à 20°C à 50°C, ajouter le modificateur au deuxième mélange pour obtenir un troisième mélange, chauffer lentement le troisième mélange jusqu'à 60°C à 85°C, et permettre une conservation à chaud du troisième mélange pendant 60 min à 120 min ; et
(3) ajouter l'agent de rétention d'eau au troisième mélange pour obtenir un quatrième mélange, et après que l'agent de rétention d'eau est complètement dissous, refroidir le quatrième mélange à la température ambiante pour obtenir l'adhésif à base de lignine sans formaldéhyde.

7. Procédé de préparation de l'adhésif à base de lignine sans formaldéhyde selon la revendication 6, dans lequel à l'étape (1), une teneur massique de la lignine dans la solution d'éthanol contenant de la lignine est de 38% à 45%.
